Europäisches Patentamt

(19) European Patent Office

Office européen des brevets

(11) Publication number: **0 069 314**
**B1**

(12) **EUROPEAN PATENT SPECIFICATION**

(45) Date of publication of patent specification: **12.08.87**

(51) Int. Cl.⁴: **G 06 F 15/16,** G 06 F 9/44

(21) Application number: **82105703.1**

(22) Date of filing: **28.06.82**

(54) **A concurrent network of reduction processors for executing programs stored as treelike graphs employing vaiable-free applicative language codes.**

(30) Priority: **07.07.81 US 281065**

(43) Date of publication of application:
**12.01.83 Bulletin 83/02**

(45) Publication of the grant of the patent:
**12.08.87 Bulletin 87/33**

(84) Designated Contracting States:
**BE DE FR GB IT NL**

(56) References cited:
**EP-A-0 018 755**

**SOFTWARE PRACTICE AND EXPERIENCE, vol. 9, 1979, pages 31-49, New York (USA); D. A. TURNER: "A new implementation technique for applicative languages"**

**PROCEEDINGS OF THE NATIONAL COMPUTER CONFERENCE, 4th-7th June 1979, pages 613-622, Montvale (USA); R. M. KELLER et al.: "A loosely-coupled applicative multi-processing system"**

(73) Proprietor: **BURROUGHS CORPORATION (a Delaware corporation)**
**Burroughs Place**
**Detroit Michigan 48232 (US)**

(72) Inventor: **Hagenmaier, Carl Fredrik, Jr.**
**RR No 1, Box 25 Alexandria Manor**
**Pittstown New Jersey 08867 (US)**
Inventor: **Logsdon, Gary Lee**
**12602 Blackfoot Trail**
**Round Rock Texas 78664 (US)**
Inventor: **Bolton, Brent Cecil**
**8405 Bent Tree Rd. No. 2811**
**Austin Texas 78759 (US)**
Inventor: **Miner, Robert Lawrence, Jr.**
**6905 Danwood Drive**
**Austin Texas 78759 (US)**

(74) Representative: **Modiano, Guido et al**
**MODIANO, JOSIF, PISANTY & STAUB Modiano & Associati Via Meravigli, 16**
**I-20123 Milan (IT)**

**0 069 314**

(58) References cited:

**Proceedings of the International Symposium
on Functional Programming Languages and
Computer Architecture; June 1981; Göteborg,
Sweden; pages 32-62; Darlington et al.: "A
Multiprocessor Reduction Machine for Parallel
Evaluation of Applicative Languages"**

**Proceedings of the LISP-80 Conference; August
1980; Stanford, California, USA; pages 128-
135; Clarke et al.: "SKIM - The S,K,I Reduction
Machine"**

## Description

This invention relates to a digital processor which is adapted to execute programs employing abstracted applicative language code, and more particularly to such a processor which reduces higher order functions by progressive substitutions of equivalent expressions.

Most digital computers on the market today are still of the type first postulated by John von Neumann and are sequential in their execution of commands. In programming such computers, the programmer has the responsibility for specifying storage management as well as control-flow management and the design of the algorithm to be implemented by the computer. The first higher level languages for programming computers were imperative in nature in that they called for a sequence of commands to be implemented in an iterative fashion. A particular attempt at introducing parallelism into a program execution has been in the creation of data-flow or data-driven systems. See, for example, Barton et al U.S. Patent No. 3,978,452. However, such systems were still designed to execute programs written in imperative languages which do not readily accommodate a high degree of parallelism.

Pure applicative program languages, such as pure LISP, differ from the more conventional imperative languages, such as FORTRAN and COBOL, in that the latter specify a sequence of steps to be carried out in a particular order while the former do not. Applicative languages generally are based on the lambda calculus of A. Church and are very concise. However, they do not provide for storage and are not history sensitive. Thus, practical implementations of such languages as LISP take on many iterative features and the programmer is still responsible for the control-flow sequencing as well as the basic algorithm design (cf., J. McCarthy et al, *LISP 1.5 Programmer's Manual*, M.I.T. Press, 1962).

A particular applicative language as a readable alternative to pure LISP is the Saint Andrews Static Language, or SASL, which was proposed by David A. Turner (*SASL Language Manual,* University of St. Andrews, 1976). This language can be implemented by employing a number of "combinators" and also primitive functions to transform SASL source code into a notation in which bound variables do not occur to produce a variable-free object code, (D. A. Turner, "A New Implementation Technique for Applicative Languages", *Software—Practice and Experience,* Vol. 9, pp. 31—49, 1979). This language is particularly advantageous for handling higher order functions, including nested functions and non-strict functions in which an answer may be returned even though one of its arguments is undefined. Thus, when a particular combinator is encountered, it can be reduced or evaluated by progressive substitutions of equivalent expressions. As a result, two-cell nodes may be stored in memory as a treelike graph where some cells specify either a function such as a combinator or a primitive function and other cells specify a value or pointers or addresses to other cells. A node may contain both a function and a value.

Such programs may be said to be demand-driven in that only those functions are evaluated as are necessary and the language is completely concurrent in that the respective functions can be evaluated independently of one another subject to the constraint that, for a given graph, some functions may terminate and others may not. Thus, such programs may be executed by a network of reduction processors operating either simultaneously or independently of one another. In this manner, the programmer is relieved of both storage management responsibilities as well as the responsibilities for the control-flow management.

In the document "Proceedings of the LISP-80 conference", August 1980, Stanford, California, U.S.A. pages 128 to 135, Clarke et al, there is disclosed a reduction processing system for executing a program employing a variable-free applicative language code, said system including apparatus which comprises:

storage means for storing said program as a treelike graph (Figure (1A) in the form of nodes (Figure 9) having first and second cells, one cell in each of some of said nodes containing a storage address of another said node, another of said cells in each of some of said nodes containing code representing a function, and another of said cells in each of some of said nodes containing a variable-free operator code specifying a function substitution; and

processor means operably connected to said storage means to retrieve said nodes for reduction thereof to produce a result by one or more steps of said function substitution.

The SKIM processor of the above document was built to explore pure functional programming, combinators as a machine language and the use of hardware to provide direct support for a high level language. It raises the possibility of parallel processing and states that this is an issue which is not addressed.

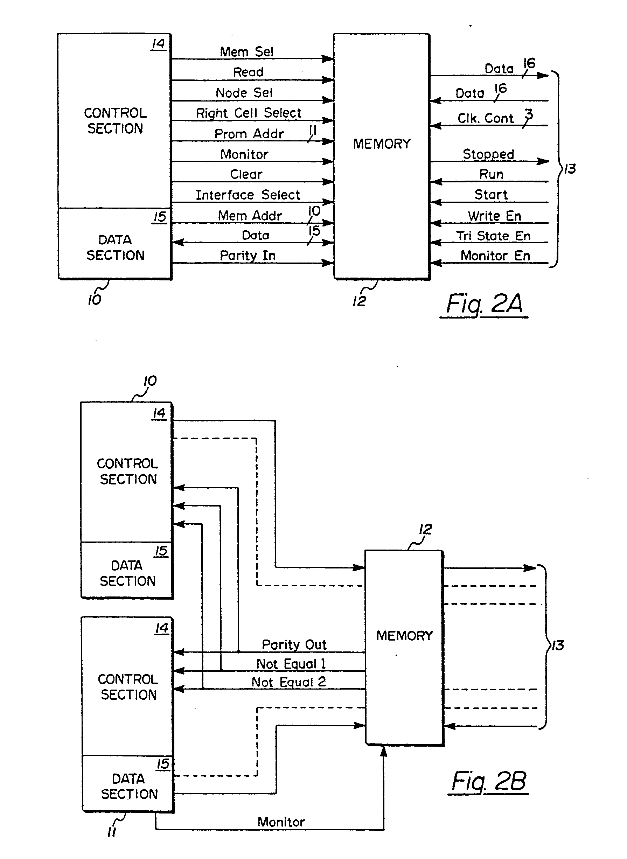

The document "Proceedings of the National Computer Conference", 4th to 7th June 1979 at pages 613 to 622, R. M. Keller et al describes a proposed machine called AMPS and presents some of its major philosophical considerations together with an execution model for a subset of the machine language. The physical arrangement of components in AMPS is a tree structure to which combined processor/memory units are attached as leaf nodes, as shown in Figure 2 thereof.

The document "Proceedings of the International Symposium on Functional Programming Languages and Computer Architecture", Sweden, June 1981, pages 32 to 62, Darlington et al describes aspects of the development of a Pascal simulator for an abstract machine called ALICE, a scheme is presented for the parallel evaluation of a wide variety of determinstic applicative languages, and the architecture of a machine on which it may be implemented is developed. The architecture is envisaged at the abstract level as a pool of packets and a collection of packet processing agents as shown in Figure 9. Schemes for small and large scale machines are shown in Figures 10 and 11.

An object of the present invention is to provide an improved reduction processing system.

The present invention is characterized in that:

said apparatus forms a module in which one said storage means is coupled to one said processor means;

said system includes a plurality of said modules;

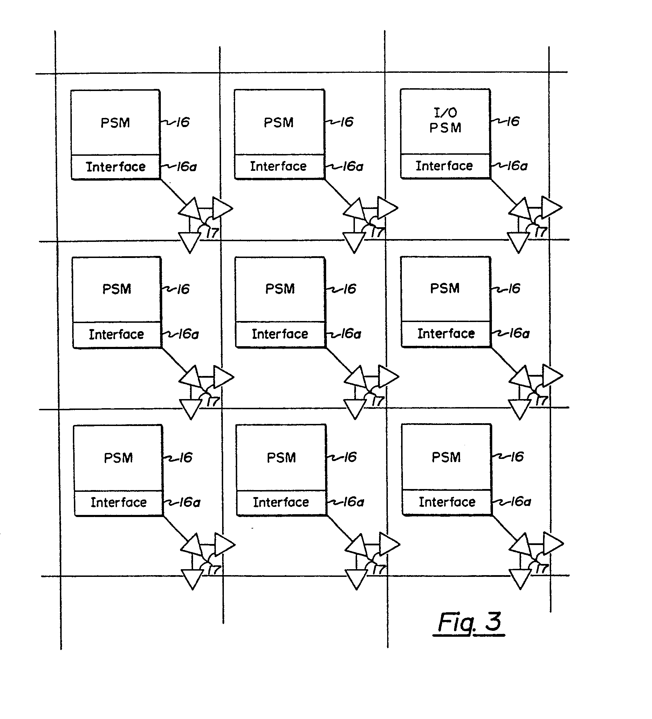

a network (Figure 3) of intersecting lines is provided, said modules each being independently connected to said network lines by individual coupling means; and

said nodes of said graph are stored in the plurality of storage means of a plurality of said modules so that the corresponding plurality of processor means individually operably connected to those last-mentioned storage means concurrently effect their said retrieval of their portion of the nodes of the graph stored in their corresponding storage means for concurrent reduction of those nodes.

An embodiment of the present invention will now be described, by way of example, with reference to the accompanying drawings, in which:—

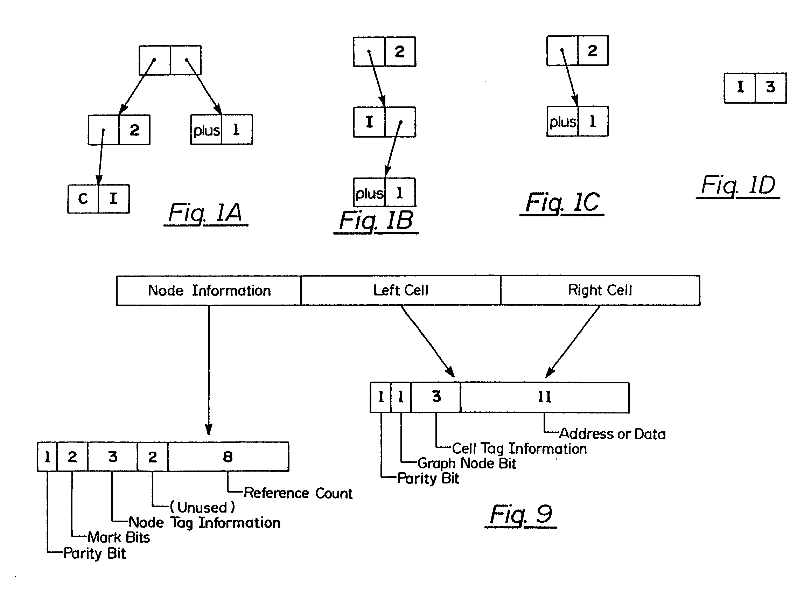

Figures 1A, B, C and D represent treelike graphs of the type for which the present invention is adapted;

Figures 2A and 2B represent different embodiments of a module for use in the present invention;

Figure 3 is a schematic diagram of a concurrent network of processors and memories according to the present invention;

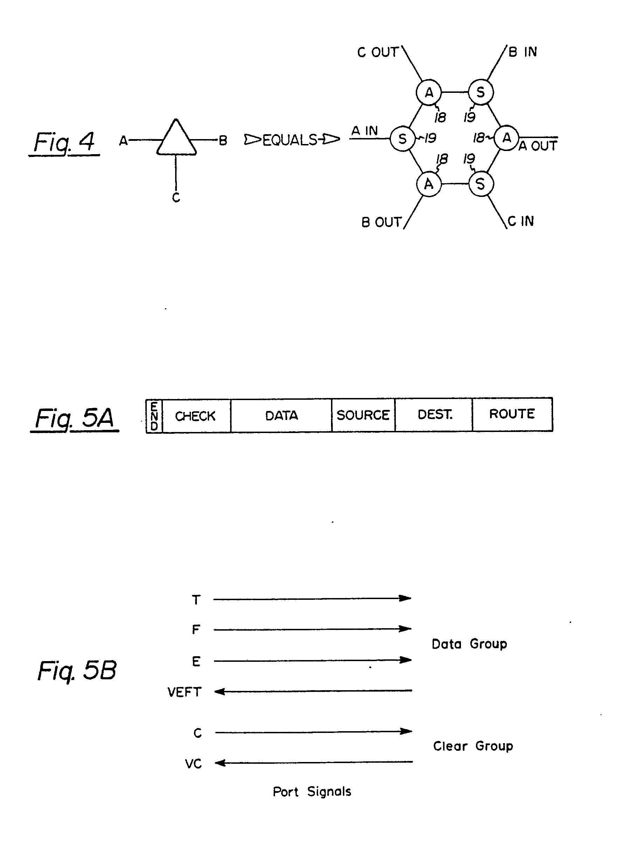

Figure 4 is a diagram of a hexagonal configuration of arbiter and selector switches as employed in the described embodiment of the present invention;

Figures 5A and 5B are representations of a message format and the switch interface respectively as employed in the described embodiment of the present invention;

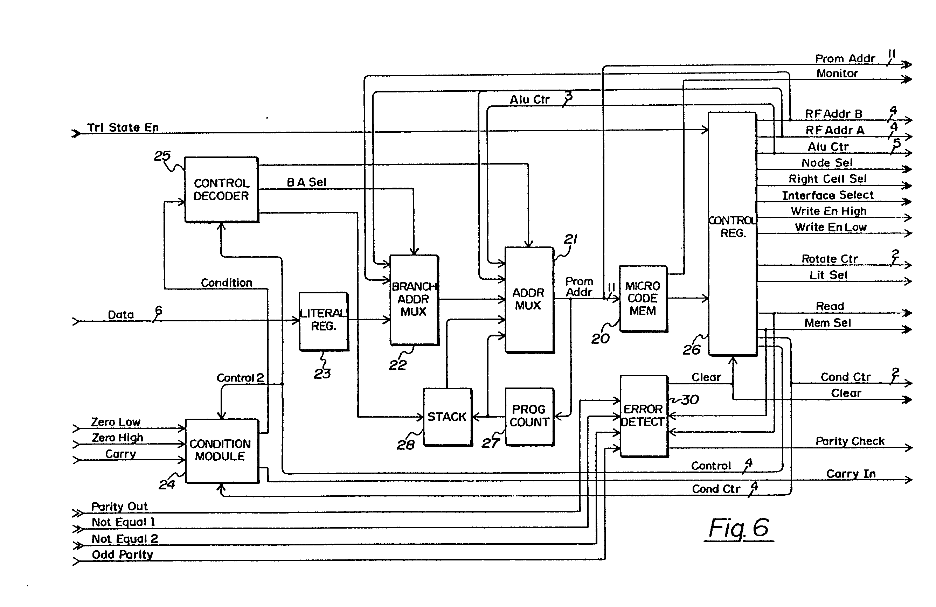

Figure 6 is a schematic diagram of the control section of a module in the described embodiment of the present invention;

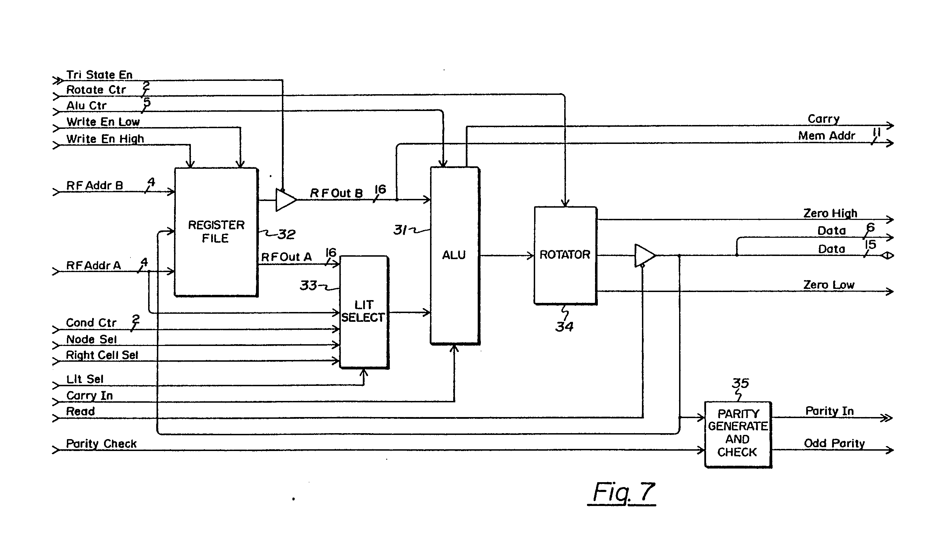

Figure 7 is a schematic diagram of the data section of a module in the described embodiment of the present invention;

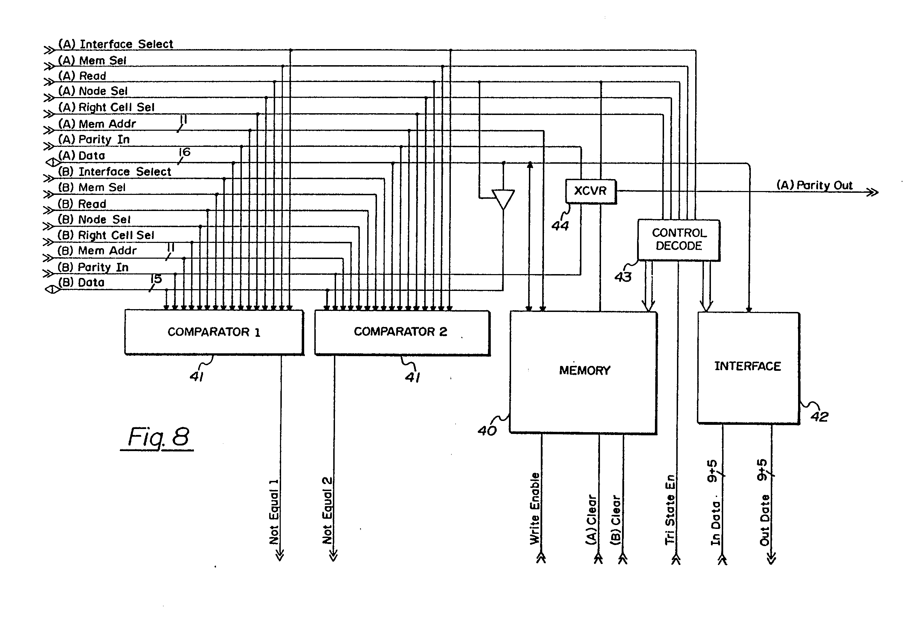

Figure 8 is a schematic diagram of the memory interface of a module in the described embodiment of the present invention; and

Figure 9 is a diagram of the format of a node of the type from which such treelike graphs are formed.

The implementation technique proposed by Turner (supra) employs a set of operators which may be either primitive functions such as add, subtract, and so forth, or combinators S, K, I, and so forth, which are higher order non-strict functions in the sense that they can return a result even though one or more of their arguments is not defined. These combinators are formally defined by substitution rules as follows:

$$S\ f\ g\ x => f\ x\ (g\ x)$$
$$K\ x\ y => x$$
$$Y\ h => h\ (Y\ h)$$
$$C\ f\ g\ x => (f\ x)\ g$$
$$B\ f\ g\ x => f\ (g\ x)$$
$$I\ x => x$$
$$U\ f\ (P\ x\ y) => f\ x\ y$$
$$cond\ true\ x\ y => x$$
$$cond\ false\ x\ y => y$$
$$plus\ m\ n => m+n$$

where:

m, n must already have been reduced to numbers.

The S combinator, when applied to two functions, f and g, of a single argument x, results in the function f(x) being applied to g(x); the K combinator, when applied to one argument as a function of a second argument, results in the first argument. The I combinator is an identity combinator. In addition, other combinators are postulated such as B and C combinators which are combinations of the S and K combinators. A P combinator is a pairing operation and a U combinator is an "uncurry" function where a curry operation is an abstraction operation. Other combinators and their definitions are to be found in the above-referenced Turner publication.

The definitions of these various combinators serve as substitution rules by which an expression may be evaluated by progressive substitution to reduce the expression to a final result. The substitution rules then serve to form a type of compiler by which an expression to be evaluated can be translated to a machine operable code, and the present invention is directed toward a reduction processor and the operating code therefor for implementing an applicative program language of the type described by Turner.

A brief example of how the reduction processor of the present invention operates is illustrated in Figures 1A, 1B, and 1C. This illustration is for the evaluation of the expression: successor of 2, where the successor function is defined as suc x=1+x. This compiles to the code: CI2(plus 1) where the C and I are two of the combinators described above. The reduction processor of the present invention progressively transforms this expression as follows:

I(plus 1)2    using the C-rule
Plus 1 2    using the I-rule
3    using the plus rule.

With the present invention, various programs or sequences of expressions to be evaluated are stored in memory as graphs built of two-cell nodes where each cell includes either a value or a pointer or a combinator or a primitive function. Figure 1A shows a plurality of such cells in which the above compiled expression code is stored where the arrows represent pointers or addresses to related cells. Figure 1B illustrates the storage cell arrangement after the first transformation given above. Figure 1C illustrates the cell arrangement after the second transformation specified above. Figure 1D illustrates the storage cell arrangement after the third transformation with the final result.

In this manner, incoming expressions are transformed into combinations which are stored as binary trees with nodes representing functional applications. The reduction processor of the present invention then proceeds to evaluate the expression through progressive transformations until a result is achieved. Furthermore, as was indicated above, it can be theoretically shown that different expressions can be evaluated independently or concurrently of one another so as to accommodate a network of such processors each of which may be simultaneously evaluating or executing different portions of a program or different programs.

The function of the reduction processor of the present invention is to reduce the S-K graphs of which Figures 1A, ..., D are but an example. These graphs are so referred to because of the principal substitution rules that were described above. This reduction results in a series of output values or functions. The result of a sequence of such reductions is independent of the order in which the reductions are carried out, subject to the constraint that on a given graph some reduction orders may terminate whereas others may not. Thus, the reductions normally can be performed in any order and readily lend themselves to a concurrent network of such reduction processors, one or more of which may be operating on the same graph, in which case the reduction scheme is referred to as a multi-thread reduction scheme.

Each module in the present invention uses a single-thread reduction scheme known as normal-order reduction, in which the leftmost instance of a reduction rule, present at each step, is evaluated. The reduction processor traverses left subtrees of the graph until it encounters an operator. The appropriate reduction rule is applied and the left subtree of the transformed graph is again traversed.

One embodiment of module for use in the present invention is illustrated in Figure 2A wherein reduction processor 10 communicates with memory 11 which in turn communicates with the outside world by way of interface 13. Processor 10 consists of a control section 14 and data section 15 as will be more thoroughly described below.

A module may include two such processors as indicated in Figure 2B, both of which communicate with memory 12 that in turn communicates with the outside world by way of interface 13. The function of the two processor embodiment is to allow for the monitoring of the outputs of both processors and to indicate an error if they disagree.

The function of the memory associated with each processor is to store the nodes of the graph that are to be reduced by the processor. The processor removes nodes from memory and performs various operations with them. The processor can also create new nodes in memory and delete unused ones as will be more thoroughly described below.

At any time during the process of reduction, the S-K processor's node memory contains three categories of nodes. There are the nodes which compose the graph being reduced, the nodes on the "free list" (a linked list of unused nodes), and there are discarded nodes. During reduction, nodes on the free list are incorporated into the graph as needed. Other nodes and groups of nodes are detached from the graph, becoming discarded nodes. "Garbage collection" is the process of finding these discarded nodes and returning them to the free list.

There are two garbage collection schemes used in the present processor. These are the mark-scan and reference count algorithms. Mark-scan is implemented by traversing the graph and marking all reachable nodes. When the mark phase is completed, the node memory is scanned (all nodes in the memory are read). Unmarked nodes found during the scan are returned to the free list. The disadvantages of mark-scan are that the entire graph must be marked and the entire memory must be scanned. This takes a great deal of time, causing a pause in the operation of the processor.

The reference count algorithm works by maintaining counters in each node in the graph of the number of other nodes pointing to that node. Every time a reference to a node is removed, its reference count is decremented. When the reference count is equal to zero, the node is garbage and is added to the free list. The reference count garbage collector can collect each node of garbage as it is generated, thus avoiding the pauses of the mark-scan collector. Furthermore, reference counting can do this with very little overhead. The disadvantage of the reference count scheme is that a collection of nodes may point to each other (e.g., A points to B which points to A) but are not pointed to from outside the cycle. When the last pointer into a cycle is removed, all nodes in that cycle have a reference count of at least one and so are not collected. By using mark-scan in addition to reference counting, the cycle problem can be solved. Reference counting is used until there are no more nodes on the free list, at which time mark-scan is invoked.

A concurrent network of the processor storage modules (PSM) of Figure 2A is illustrated in Figure 3, which will now be described, wherein the processor storage modules 16 are coupled together by a nearest neighbor switching network that is formed of hexagonal configurations of speed independent arbiter and selector switches. In Figure 3, three hexagonal configurations 17 are required for coupling a corresponding processor storage module 16 to the network. A more detailed illustration of a respective hexagonal configuration is provided in Figure 4 where three arbiter switches and three selector switches are employed.

An arbiter switch is a switch or node which receives asynchronous transmission from one of two different nodes and transfers that message in asynchronous manner to another node. An arbiter switch is disclosed in detail in the Clark U.S. Patent No. 4,251,879 which is assigned to the assignee of the present invention. A selector switch or node is a switch that receives a message from another node and transmits it to one of two other nodes according to the first bit in the serial transmission to be received. Such a selector switch is disclosed in the Clark U.S. Patent No. 4,237,447 which is assigned to the assignee of the present invention.

Both of the above cited patents may be consulted for the details of the respective arbiter and selector switches which will not be described in detail here, except to say that, in the present invention, the arbiter switches do not add a source identification bit to the end of a message that has just traversed the switch as described in the above identified patents, nor do those patents teach the presence of a clear signal group as described below. Furthermore, these patents do not teach arbiter switches designed to respond to input signal transitions rather than signal voltage levels so that the switches respond only once to a persistent true signal, which condition is removed by a clear signal.

Figure 4 illustrates that such a hexagonal configuration receives transmission from three different sources and provides transmission to three different sources and it is for this reason that such configurations are illustrated in Figure 3 by triangular symbols 17 and that three such configurations are required to couple each processor storage module to its four nearest neighbors in a rectangular matrix-type of network. Other types of configurations are described in the Barton et al patent application EP—A—0 018 755 assigned to the assignee of the present invention.

As was indicated above, transmission between nodes is asynchronous and in a serial manner and the switching by each of the selector switches is according to the first bit in the destination address of the message being transmitted, which bit is removed as the message and its address pass through this selector switch. Thus, the destination address serves as a routing map for the message as it traverses the network. In order to accommodate such serial transmission, each of the processor storage modules of Figure 3 is provided with a corresponding communications interface 16 which includes a parallel-to-serial buffer register since the data transfer between the processor and memory of the respective modules is parallel.

The format of such message transmission is illustrated in Figure 5A and begins with (from right to left) the routing information or destination address which is then followed by a destination identification, source identification, the data being transmitted, an error checking field, and an end of message signal. The interface between the respective switches or nodes of the network is illustrated in Figure 5B, it being understood that two such interfaces are required between each of two such nodes for respective transmission in opposite directions. Each interface includes a data group of signal lines and a clear group of signal lines.

The data group is made up of three signal lines in the forward section, "T" (true), "F" (false), and "E" (end) to signal the end of message. In the reverse direction, the data group also includes a "VEFT" (vacant end, false, true) to acknowledge the transmission of each of the data characters, which acknowledgment is required between the respective nodes to accommodate asynchronous transmission.

The clear group of signal lines employs a forward signal "C" (clear)) and a reverse signal "VC" (vacant clear). The clear group of signals is employed for clearing or resetting one or more transmission paths in the event that that transmission path becomes locked in or "stuck" due to any malfunction which prevents the completion of the message transmission. It will be appreciated, that without the "clear" feature, any purely asynchronous system can become "stuck" as the system cannot distinguish between an event that has not yet occurred (but eventually will) and one that will never occur. Thus, periodically, the processor sending the message is designed (programmed) to periodically stop transmission and issue a clear signal and any partial messages on the transmission path will not be completed, no acknowledgment signal will be returned, and that processor will transmit the message again at a later time.

Control section

The control section of the reduction processor will now be described in relation to Figure 6. This control section responds to the various function and primitive operators to generator the control signals required to activate the various units of the processor, which control signals are stored in a microcode memory. This microcode serves to interpret the SASL language for which the present invention is adapted.  In Figure 6, the heart of the control section is microcode memory 20 which stores the microcode that has been generated for the interpretation of the compiled code which makes up the various nodes of the S-K graph stored in memory 12 of Figures 2A and B. Microcode memory 20 may be formed of a plurality of ROMs, PROMs, or EPROMs. Such a microcode memory would normally contain 2K words of 40 bits each.

Microcode memory 20 is addressed by address multiplexer 21 which selects the microcode memory address between three possible address sources. One such source is program counter 27 which allows for sequential execution of microcode memory words. A second source is the top of stack 28 which is used for returning from subroutines and the third source is the output of the branch address multiplexer 22.

Branch address multiplexer 22 selects between two possible branch addresses. The first is a branch address literal coming from control register 26 as will be more thoroughly described below. The microcode memory address in one embodiment of the present invention is 11 bits in width. The second possible branch address is a concatenation of the output of literal register 23 (in the least significant 6 bits) and the branch address literal from control register 26 (in the most significant 5 bits). This permits a case on the value from the data section as will be described below.

Condition module 24 stores and selects the various data section conditions and is implemented with programmable array logic (PAL) and consists of a condition register and a condition multiplexer (not shown). The condition register is divided into two sections, one of which simply stores the data section conditions on each system clock. The second section controls the carry flip-flop which can be set, reset, updated or left unchanged. The CARRY IN signal from this section goes to the arithmetic logic unit of the data section as will be more thoroughly described below. The condition multiplexer selects a condition from the stored version of the various data section conditions stored in the condition register.

Other units of the control section include literal register 23 which stores 6-bit literals coming from the data section as well as stack 28 which is used to store the return address for subroutines. Stack 28 is five words deep and therefore can support five levels of subroutine nesting. Program counter 27 is a register which is loaded to each clock time with the output of address multiplexer 21 incremented by one. On a subroutine call the output of this register is pushed onto the top of stack 28.

Control decoder 25 provides the control signals for the stack 28, branch address multiplexer 22, and address multiplexer 21. These signals are created by decoding the CONTROL lines while taking the state of the select condition into account. Error detect module 30 is provided to force the processor into a reset state if there is a parity error or if, in the two-processor mode, the two processors disagree.

Control register 26 is a register which is loaded with the output of microcode memory 20 on each system clock and contains all the control signals for both the data and control sections. The control register fields are discussed below.

Microoperators

The microoperators are really those fields which are read out of control register 26 and will now be generally described. They include register file addresses for addressing one of the other sides of a word location in the register file 32 of the data section; write enable signals which indicate which portions of word locations in the registers file should be written into; the selection of control section literals or the output of one side of the register file as was described above in regard to the use of literals; arithmetic logic unit (ALU) controls which are described below; rotator control signals; memory selection for memory addressing and node selection; condition module controls; data literal selections; control literal selections; and branch address literal selections.

Data section

The data section of the reduction processor will now be described in relation to Figure 7. This data section transfers nodes to and from memory and also stores and performs various operations as required on those nodes. The principal instrument for these operations is ALU 31 which performs all standard arithmetic and Boolean logic operations.

Register file 32 stores 16 words of 16 bits each. The most significant bit of the word has no logical use. However, it must be considered when doing some operations with ALU 31. The register file has two outputs which can be separately addressed. Information to be stored in the register file uses one of these addresses. Of the two output ports of register file 32, one is always used as a main memory address. The respective halves of the register file word can be written independently or they can be written together using appropriate write enable signals.

Rotator 34 has the ability to rotate an output word from the ALU one bit in either direction. This rotation is done only on the least significant 15 bits of the word as the most significant bit is ignored. Rotator 34 also indicates if its output is equal to zero. Actually there are two zero indications, one for each half of the output word. Parity generate and check module 35 generates parity for the data being written into main memory and also checks parity for data being read from main memory.

Differences in arithmetic precision and representation often cause problems in transporting high level language programs from one machine to another. One way of circumventing this problem is to implement only variable length integer arithmetic.

In the reduction processor of the present invention, this feature can be implemented by representing numbers as lists of digits. In this manner arbitrary precision may be obtained. The algorithms required for arithmetic operations on lists are implemented in the firmware or microcode of the processor. When arithmetic is performed in this way, the processor requires only primitive hardware arithmetic capabilities. This processor is designed to support both list arithmetic and conventional scalar arithmetic. List arithmetic will be carried out using lists of 8-bit Unsigned binary integers. Scaler arithmetic will use 8-bit Two's complement integer.

## Memory interface

Figures 2A and 2B illustrate embodiments of the memory unit to be accessed by both the processor of the present invention and external sources. The actual memory interface is illustrated in Figure 8. Memory 40 is accessible to receive and supply data on the bidirectional data line in response to addresses provided on the memory address line, which addresses are supplied from the register file 32 of the processor of Figure 7. Correspondingly, data may be transferred to and from the processor and interface module 42 for transmission to devices external to the processor and memory. The respective transfer modes of memory 40 and interface 42 are determined by control decode unit 43 in response to four control signals received from the control section of the processor. In addition, the memory interface of Figure 8 includes comparators 41 to compare the output of two different processors when the two-processor configuration of Figure 2B is adopted.

## Node format

The format of each node as stored in main memory is illustrated in Figure 9. There are three fields to this node including a 16-bit node information field, a 16-bit left cell field, and a 16-bit right cell field. As indicated in Figure 9, the respective cell fields include an 11-bit field for address or data which may be either an 11-bit address or eight bits of data preceded by a 3-bit type field. The data types specified by this latter 3-bit field are Unsigned binary integer, Two's complement binary integer, Operator, EBCDIC character, Boolean, Error, or Special. The 3-bit cell tag information field specifies whether the cell is an atom or contains a pointer forward in the graph or pointers either back left or back right up the graph. In addition, the cells include a one-bit graph node bit which indicates whether the cell is contained in a functional application node or if the node information field must be consulted to find the node type.

The node information field includes an 8-bit field which is used for reference counting 3-bit field which specifies whether the node is a functional application node, a list node, a function node (i.e., partially reduced graph), or an arithmetic list node. In addition, there is a 2-bit mark field which indicates whether either the right cell has been marked, the left cell has been marked, both cells have been marked, or neither cell has been marked. A parity bit is also provided.

The operator codes that may be found in either of the left or right cells of the node format include all the operators representing the SASL transformations indicated above plus certain other such transformations as well as arithmetic and Boolean operations such as greater than or equal, less than or equal, AND, OR, negative, and NOT or negate.

## Macroinstruction descriptions

The principal macroinstructions will now be briefly described. Macros are a number of microinstructions which are inserted into the object code at assembly time. Macros are chosen to perform operations which are convenient for performing S-K reduction, but for which no single microinstruction exists. These macroinstructions include MOVE, STORE, and GET instructions which specify either the moving of contents from one data section register to another, storing the contents of one data section register in a node cell, or calling the contents of a node cell of a memory address contained in one data section register to be stored in another data section register.

In addition, these macroinstructions specify a Branch, Branch on Condition, Branch to a Reduction Routine for One of the Reduction Operators, Branch to a Subroutine in the Control Memory and to Store the Return Address on Top of the Stack, Branch to the Control Memory Address on the Top of the Stack for Return, Addition, Subtraction, and various Boolean operations.

A network of reduction processors has been disclosed above for the evaluation of one or more functions which are stored in memory in the form of a series of nodes of a treelike graph where the nodes implement a variable-free applicative language. The respective function operators are reduced through a progressive series of transformations or substitutions until a result is obtained. During the reduction process, the processor transfers nodes to and from memory and performs various operations as required on those nodes. The processor can also create new nodes in memory and delete unused ones. Difference in arithmetic precision is accommodated by implementing only variable-length integer arithmetic by representing numbers as lists of digits and the processor is designed to support both list arithmetic and conventional scalar arithmetic.

## Claims

1. A reduction processing system for executing a program employing a variable-free applicative language code, said system including apparatus (16) which comprises:—

storage means (12) for storing said program as a treelike graph in the form of nodes having first and second cells, one cell in each of some of said nodes containing a storage address of another said node, another of said cells in each of some of said nodes containing code representing a function, and another of said cells in each of some of said nodes containing a variable-free operator code specifying a function substitution; and

processor means (10) operably connected to said storage means (12) to retrieve said nodes for reduction thereof to produce a result by one or more steps of said function substitution;

characterized in that:

said apparatus forms a module (16) in which one said storage means (12) is coupled to one said processor means (10);

said system includes a plurality of said modules (16);

a network of intersecting lines is provided, said modules (16) each being independently connected to said network lines by individual coupling means (16a, 17); and

said nodes of said graph are stored in the plurality of storage means of a plurality of said modules (16) so that the corresponding plurality of processor means individually operably connected to those last-mentioned storage means concurrently effect their said retrieval of their portion of the nodes of the graph stored in their corresponding storage means for concurrent reduction of those nodes.

2. A reduction processing system according to claim 1 characterized in that each said individual coupling means (16a, 17) comprises a series of arbiter switches (18) and selector switches (19), wherein each said arbiter switch is connected to receive a message from one of two said selector switches and to provide said message as an output to a third said selector switch, and each said selector switch is connected to receive a message from an arbiter switch and to switch it to one of two other said arbiter switches.

3. A reduction processing system according to claim 1 or claim 2 characterised in that:

each said storage means (12) comprises a main memory (40) having a plurality of addressable storage locations storing a portion of said nodes of the graph being reduced, currently unused nodes available for incorporation into the graph as needed, and nodes discarded during reduction of the graph; and

each said processor means (10) comprises a control section (14) and a data section (15) coupled to each other and each coupled to the corresponding storage means (12);

said control section (14) includes a microcode memory (20), and a control register (26), coupled between said microcode memory (20) and said data section (15), to receive control signals stored in said microcode memory for provision to said data section; and

said data section (15) includes a register file (32) to receive a said node retrieved from said main memory (40) for a step of said reduction by function substitution and return to a storage location in said main memory under the enabling control of said control signals provided by the control register (26) of said control section (14), and includes an arithmetic logic unit (31) to perform a primitive function on a cell of a said node stored in a said register file (32).

4. A reduction processing system according to any one of claims 1 to 3 characterized in that the format of each said node as stored in each said storage means (12) comprises first and second fields forming said respective cells and a third field containing information specific to said node.

5. A reduction processing system according to claim 4 characterized in that said third field includes a mark bit field and a reference count field, in that each said processor means (10) is adapted to set a mark bit in a said node whenever another of said nodes contains an address pointing to the first-mentioned node in the corresponding storeage means (12), in that said processor means (10) is adapted to respectively increment or decrement said reference field count whenever another said node respectively acquires or loses a reference to the first-mentioned node, and in that a reference counting procedure is used until there are no said currently unused nodes in said storage means (12) at which time a mark scan procedure is implemented, both said reference count procedure and said mark scan procedure being employed to return the addresses of currently unused nodes to a list of addresses of said nodes available for incorporation into the graph.

## Patentansprüche

1. Reduktions-Verarbeitungssystem zur Ausführung eines Programms, welches einen Anwendersprachcode ohne Variablen enthält, mit einer Vorrichtung (16), die enthält:

Speichereinrichtungen (12) zum Speichern des Programms als baumähnlicher Graph in Form von Knoten mit ersten und zweiten Zellen, wobei eine Zelle in einigen Knoten eine Speicheradresse eines anderen Knoten, eine andere Zellen in einigen Knoten einen eine Funktion darstellenden Code, und eine andere Zelle in einigen Knoten einen Operatorcode enthält, der frei von Variablen ist und eine Funktionssubstitution kennzeichnet; und

einen Prozessor (10), der mit den Speichereinrichtungen (12) in Verbindung steht, um die Knoten für die Reduktion auszulesen und durch einen oder mehrere Schritte der Funktionssubstitution ein Ergebnis zu gewinnen,

dadurch gekennzeichnet,

daß die Vorrichtung einen Modul (16) bildet, in dem eine der Speichereinrichtungen (12) mit einer der Prozessoreinrichtungen (10) verbunden ist,

daß das System mehrere Module (16) enthält,

daß ein Netzwerk aus sich kreuzenden Leitungen vorgesehen ist, wobei die Module (16) unabhängig voneinander mit den Netzwerk-Leitungen durch individuelle Koppeleinrichtungen (16a, 17) angeschlossen sind, und

daß die Knoten des Graphen in den Speichereinrichtungen von mehreren Modulen (16) gespeichert sind, so daß die entsprechende Zahl an Prozessoreinrichtungen, die einzeln mit den letztgenannten Speichereinrichtungen in Verbindung stehen, gleichzeitig das Wiederauffinden des Teils der in den korrespondierenden Speichereinrichtungen gespeicherten Knoten des Graphen durchführen, um diese Knoten gleichzeitig zu reduzieren.

2. Reduktions-Verarbeitungssystem nach Anspruch 1, dadurch gekennzeichnet, daß die einzelnen Koppeleinrichtungen (16a, 17) mehrere Arbiter-Schalter (18) und Wählschalter (19) enthalten, daß jeder Arbiter-Schalter eine Nachricht von einem von zwei Wählschaltern empfängt und die Nachricht als Ausgangsnachricht einem dritten Wählschalter zuführt, und daß jeder der Wählschalter eine Nachricht von einem Arbiter-Schalter empfangen, und diese Nachricht an einen oer zwei andere Arbiter-Schalter umschalten kann.

3. Reduktions-Verarbeitungssystem nach Anspruch 1 oder 2, dadurch gekennzeichnet, daß jede der Speichereinrichtungen (12) einen Hauptspeicher (40) mit mehreren adressierbaren Speicherplätzen enthält, die einen Teil der Knoten des zu reduzierenden Graphen, augenblicklich unbenutzte und bei Bedarf zum Einbau in den Graphen verfügbare Knoten, und während der Reduktion des Graphen nichtbenötigte Knoten enthält, und

daß jede der Prozessoreinrichtungen (10) einen Steuerbereich (14) und einen Datenbereich (15) enthält, die miteinander und jeweils mit der entsprechenden Speichereinrichtung (12) verbunden sind,

daß der Steuerbereich einen Mikrocode-Speicher (20) und ein Steuerregister (26) enthält, welches zwischen dem Mikrocode-Speicher (20) und den Datenbereich (15) gekoppelt ist, um im Mikrocode-Speicher gespeicherte, und für den Datenbereich vorgesehene Steuersignale zu empfangen, und

daß der Datenbereich (15) eine Register-Datei (32) enthält, um den aus dem Hauptspeicher (40) wieder aufgefundenden Knoten für einen Schritt der durch Funktionssubstitution erfolgenden Reduktion zu empfangen und an einen Speicherplatz des Hauptspeichers unter der Freigabesteuerung der Steuersignale zurückzugeben, die vom Steuerregister (26) des Steuerbereichs (14) geliefert werden, und eine Arithmetik-Logikeinheit (31) enthält, um eine primitive Funktion auf eine Zelle eines in der Register-Datei (32) gespeicherten Knoten auszuüben.

4. Reduktions-Verarbeitungssystem nach einem der Ansprüche 1 bis 3, dadurch gekennzeichnet, daß das Format jedes der in den Speichereinrichtungen (12) gespeicherten Knoten erste und zweite Felder, welche die entsprechenden Zellen bilden, und ein drittes Feld aufweist, welches diesen Knoten betreffende Information enthält.

5. Reduktions-Verarbeitungssystem nach Anspruch 4, dadurch gekennzeichnet, daß das dritte Feld ein Markerungsbitfeld und ein Referenzzählfeld enthält, daß jede Prozessoreinrichtung (10) ein Markierungsbit in einem Knoten setzt, wenn ein anderer Knoten eine auf den erstgenannten Knoten zeigende Adresse in der entsprechenden Speichereinrichtung (12) enthält, daß die Prozessoreinrichtung (10) den Referenzfeld-Zählwert erhöht oder verringert, wenn ein anderer Knoten eine Bezugnahme auf den erstgenannten Knoten erlangt bzw. verliert, und daß eine Referenzzähl-Prozedur solange verwendet wird, bis keiner der augenblicklich unbenutzten Knoten mehr in der Speichereinrichtung (12) vorhanden ist, zu welchem Zeitpunkt dann eine Markierungs-Abtastprozedur durchgeführt wird, und wobei die Referenz-Zählprozedur und die Markerungs-Abtastprozedur eingesetzt werden, um die Adressen der augenblicklich unbenutzten Knoten in eine Adressliste derjenigen Knoten zurückzustellen, die zum Einbau in einen Graphen verfügbar sind.

**Revendications**

1. Système de traitement par réduction pour exécuter un programme utilisant un code de langage applicatif sans variable ledit système comportant un dispositif (16) qui comprend:

—une mémoire (12) pour mémoriser ledit programme comme un graphe arboresecent sous la forme de noeuds possédant une première et une seconde cellules, une celle de chacun de certains desdits noeuds contenant une adresse de mémoire d'un autre desdits noeuds, une autre desdites cellules dans certains de chacun desdits noeuds contenant un code représentant une fonction, et une autre desdites cellules dans chacun de certains desdits noeuds contenant un code d'opérateur sans variable spécifiant une substitution de fonctions; et

—un processeur (10) relié fonctionnellement à ladite mémoire (12) pour extraite lesdits noeuds pour leur réduction afin de fournir un résultat par une ou plusieurs étapes de substitution de fonction;

caractérisé par le fait que:

—ledit dispositif forme un module (16) dans lequel une dite mémoire (12) est reliée à un dit processeur (10);

—que ledit système comprend une pluralité dedits modules (16);

—qu'un réseau de lignes sécantes est prévu, lesdits modules (16) étant reliés indépendamment auxdites lignes du réseau par des moyens de liaison individuels (16a, 17); et

—que lesdits noeuds dudit graphe sont mémorisés dans la pluralité de mémoire d'une pluralité dedits modules (16) de telle sorte que la pluralité correspondante de processeurs, individuellement et fonctionnellement reliés aus mémoires précitées, effectue simultanément ladite extraction de la partie des noeuds du graphe mémorisés dans leur mémoire correspondante pour une réduction simultanée de ces noeuds.

2. Système de traitement par réduction selon la revendication 1, caractérisé par le fait que chacun desdits moyens de liaison individuels (16a, 17) comprend une série de commutateurs d'arbitrage (18) et de commutateurs de sélection (19), chacun desdits commutateurs d'arbitrage étant connecté pour recevoir un message de l'un de deux commutateurs de sélection et pour fournir ledit message sous la forme d'une sortie à un troisième desdits commutateurs de sélection, et chacun desdits commutateurs de sélection étant connecté pour recevoir un message d'un commutateur d'arbitrage et pour le diriger vers l'un de deux autres des commutateurs d'arbitrage.

3. Système de traitement par réduction selon la revendication 1 ou la revendications 2, caractérisé par le fait que:

—chacune desdites mémoires (12) comprend une mémoire principale (40) possédant une pluralité d'emplacements de mémoire adressables mémorisant une partie des noeuds du graphe devant être réduit, des noeuds effectivement inutilisés disponibles pour leur incorporation dans le graph si nécessaire, et des noeuds négligés lors de la réduction du graphe;

—que chacun desdits processeurs (10) comprend une partie de contrôle (14) et une partie de données (15) reliées entre elles et chacune reliée à la mémoire correspondante (12);

—que la partie de contrôle (14) comprend une mémoire de microcode (20) et un registre de contrôle (26) connecté entre ladite mémoire de microcode (20) et ladite partie de données (15) pour recevoir des signaux de contrôle mémorisés dans ladite mémoire de microcode pour les fournir à la partie de données; et

—que ladite partie de données (15) comprend un ensemble de registres (32) pour recevoir un dit noeud extrait de ladite mémoire principale (40) pour une étape de ladite réduction par substitution de fonction et le retourner à un emplacement de mémoire dans ladite mémoire principale sous le contrôle de validation desdits signaux de contrôle fournis par le registre de contrôle (26) de ladite partie de contrôle (14), et comprend une unité logique arithmétique (31) pour exécuter une fonction primitive sur une cellule d'un desdits noeuds mémorisé dans l'ensemble de registre (32).

4. Système de traitement par réduction selon l'une quelconque des revendications 1 à 3, caractérisé par le fait que le format de chacun desdit noeuds tels que mémorisés dans chacune des mémoires (12) comprend un premier et un second champs formant lesdites cellules respectives et un troisième champ contenant une information spécifique audits noeuds.

5. Système de traitement par réduction selon la revendication 4, caractérisé par le fait que ledit troisième champ comprend un champ de bit de marquage et un champ de comptage de référence, que chacun desdits processeurs (10) est agencé pour positionner un bit de marquage dans un desdits noeuds chaque fois qu'un autre desdits noeuds contient une address pointant le noeud précité dans la mémoire correspondante (12), et que chacun desdits processeurs (10) est agencé pour respectivement incrementer ou décrementer ledit champ de comptage de référence chaque fois qu'un autre desdits noeuds respectivement acquiert ou perd une référence au noeud précité, et qu'une procédure de comptage de référence est utilisée jusqu'à ce qu'il n'y ait plus de noeud effectivement inutilisé dans ladite mémoire (12), auquel cas une procédure d'exploration de marquage est mise en oeuvre, lesdites procédures de comptage de référence et d'exploration de marquage étant utilisées pour retourner les adresses des noeuds effectivement inutilisés à une liste d'adresses desdits noeuds disponibles pour leur incorporation dans le graphe.

Fig. 1A

Fig. 1B

Fig. 1C

Fig. 1D

| | 2 |

| I | |

| plus | 1 |

| | |

| | 2 |

| plus | 1 |

| I | 3 |

| c | I |

| Node Information | Left Cell | Right Cell |

| 1 | 2 | 3 | 2 | 8 |

Parity Bit
Mark Bits
Node Tag Information
(Unused)
Reference Count

| 1 | 1 | 3 | 11 |

Parity Bit
Graph Node Bit
Cell Tag Information
Address or Data

Fig. 9

CONTROL SECTION — 14
DATA SECTION — 15

Mem Sel
Read
Node Sel
Right Cell Select
Prom Addr /11
Monitor
Clear
Interface Select
Mem Addr /10
Data /15
Parity In

MEMORY

Data /16
Data /16
Clk. Cont /3
Stopped
Run
Start
Write En
Tri State En
Monitor En

10
12
13

*Fig. 2A*

10
14
CONTROL SECTION
15
DATA SECTION

14
CONTROL SECTION
15
DATA SECTION

11

12
MEMORY
13

Parity Out
Not Equal 1
Not Equal 2

Monitor

*Fig. 2B*

2

*Fig. 3*

_Fig. 4_    A———△———B    ▷EQUALS▷

_Fig. 5A_

| E<br>N<br>D | CHECK | DATA | SOURCE | DEST. | ROUTE |
|---|---|---|---|---|---|

_Fig. 5B_

Port Signals

Fig.6

Prom Addr 11
Monitor
RF Addr B 4
RF Addr A 4
Alu Ctr 5
Node Sel
Right Cell Sel
Interface Select
Write En High
Write En Low
Rotate Ctr 2
Lit Sel
Read
Mem Sel
Cond Ctr 2
Clear
Parity Check
Carry In

CONTROL REG. 26

MICRO CODE MEM 20

ERROR DETECT 30
Clear
Control 4
Cond Ctr 4

Prom Addr 11

Alu Ctr 3

ADDR MUX 21
PROG COUNT 27
STACK 28
BRANCH ADDR MUX 22

LITERAL REG. 23

BA Sel

CONTROL DECODER 25

Condition

Data 6

Control 2

CONDITION MODULE 24

Trl State En

Zero Low
Zero High
Carry

Parity Out
Not Equal 1
Not Equal 2
Odd Parity

5

_Fig. 7_

Fig. 8